# EUROPEAN PATENT APPLICATION

(11) **EP 1 612 679 A1**
(43) Date of publication of application: **04.01.2006**
(21) Application number: 04725509.6
(22) Date of filing: 02.04.2004
(51) Int. Cl.: G06F 12/00

(54) **PROGRAM HANDLING DATA, METHOD THEREOF, AND DEVICE THEREOF**

(30) Priority: 04.04.2003 JP 2003101411
(71) Applicant: SONY CORPORATION, Tokyo 141-0001 (JP); SONY UNITED KINGDOM LIMITED, Weybridge, Surrey KT13 0XW (GB)
(72) Inventor: TSUCHIYA, Kazuhisa, Shinagawa-ku, Tokyo 1410001 (JP); SYLVESTER BRADLEY, Gareth, Weybridge, Surrey KT13 0XW (GB); BEENHAM, Dudley, c/o SONY UNITED KINGDOM LIMITED, Weybridge, Surrey KT13 0XW (GB)
(74) Representative: Turner, James Arthur
(86) International application number: PCT/JP2004/004825
(87) International publication number: WO 2004/090727

(57) **Abstract**

A reader program R_PRG parses material stream data STR3 input from an external device 3 to perform a detection process of a key (K) of KLV data from within the data STR3. The reader program R_PRG then outputs to an application program AP an event IV corresponding to the key (K) detected in step ST1.

## Description

### TECHNICAL FIELD

The present invention relates to a program for processing data having a plurality of module data respectively including a predetermined data item and an identification data item for identifying the predetermined data item, a data processing method, an apparatus for performing the data processing program, a program for generating the data, a data processing method, and a data processing apparatus for performing the data generating program.

### BACKGROUND ART

There has been proposed what is known as MXF (Material exchange Format), a data exchanging format for allowing devices to exchange data format therebetween.

An MXF stream has, for example, header data, body data, and footer data.

The header data include meta data indicating attributes of content data.

The body data include the content data such as video and audio data.

The header data, body data, and footer data have pack data which are so-called module data.

The pack data and the component data included in the pack data respectively have a key (K), a data length part (L), and a data item (V) (hereinafter, referred to KLV data).

An application program which is performed in a data processing apparatus for inputting and processing the above-described MXF streams, for example, parses the input MXF stream to detect a key therefrom, based on the detected result, and extracts and uses a data item (V) from within the KLV data including the detected key.

However, it suffers from a disadvantage of the above-described conventional method that the application program must withstand heavy workload stemming from handling two tasks in sequential: to parse the MXF stream to detect a key (K) before extracting the data item (V) corresponding to the key (K); and to use the extracted data item (V).

### DISCLOSURE OF THE INVENTION

An object of the present invention is to provide a program for reducing the workload on a data-using entity which uses a predetermined data item detected from a target data having a plurality of module data each including the predetermined data item and an identification data item for identifying the predetermined data item, a data processing method, and a data processing apparatus for the same.

Another object of the present invention is to provide a program for generating a plurality of module data respectively including a predetermined data item and an identification data item for reducing the workload on a data provider providing the predetermined data item to identify the predetermined data item, a data processing method, and a data processing apparatus for the same.

To achieve the objects of the present invention, there is provided a program as a first invention that causes a computer to execute routine, said routine comprising a first routine of detecting an identification data item for identifying a predetermined data item from a target data having a plurality of module data respectively including the predetermined data item and the identification data item; and a second routine of signaling to a data-using entity of the predetermined data that the identification data item has been detected in the first routine.

The program provided as the first invention functions as follows.

The program causes the computer to execute the first routine of detecting an identification data item from a target data having a plurality of module data respectively including a predetermined data item and the identification data item for identifying the predetermined data item.

Then, the program causes the computer to execute the second routine of signaling to the data-using entity of the predetermined data that the identification data item has been detected in the first routine.

A program as a second invention causes a computer to execute routine, said routine comprising: a first routine of requesting a predetermined data item from a data provider providing the predetermined data item; a second routine of receiving the predetermined data item from the data provider in response to the request made in the first routine; a third routine of generating module data including the predetermined data item received in the second routine and an identification data item for identifying the predetermined data item; and a fourth routine of generating data formed by a plurality of the module data generated in the third routine.

The program provided as the second invention functions as follows.

The program causes the computer to execute a first routine of requesting a predetermined data item from the data provider providing the predetermined data item.

Then, the program causes the computer to execute a second routine of receiving the predetermined data item from the data provider in response to the request made in the first routine.

Then, the program causes the computer to execute a third routine of generating module data including the predetermined data item received in the second routine and an identification data item for identifying the predetermined data item.

Then, the program causes the computer to execute a forth routine of generating data formed by a plurality of the module data generated in the third routine.

A data processing method as a third invention executed by a computer has: a first step of detecting an identification data item for identifying a predetermined data item from a target data having a plurality of module data each including the predetermined data item and the identification data item; and a second step of signaling to a data-using entity of the predetermined data that the identification data item has been detected in the first step.

A data processing method as a fourth invention executed by a computer has: a first step of requesting a predetermined data item from a data provider providing the predetermined data item; a second step of receiving the predetermined data item from the data provider in response to the request made in the first step; a third step of generating module data including the predetermined data item received in the second step and an identification data item for identifying the predetermined data item; and a fourth step of generating data formed by a plurality of the module data generated in the third step.

A data processing method as a fifth invention for causing a computer to execute a first program and a second program in parallel has: a first step of causing the first program to detect an identification data item for identifying a predetermined data item from a target data having a plurality of module data respectively including the predetermined data item and the identification data item; a second step of causing the first program to signal to the second program that the identification data item has been detected in the first step; a third step of causing the second program, based on the signal coming from the first program in the second step, to receive from the first program the predetermined data item in the module data including the identification data item detected in the first step; and a fourth step of allowing the second program to use the predetermined data item received in the third step.

A data processing apparatus as a sixth invention has: a detecting part for detecting an identification data item for identifying a predetermined data item from a target data having a plurality of module data each including the predetermined data item and the identification data item; and a signaling part for signaling to a data-using entity of the predetermined data that the detecting part has detected the identification data item.

The data processing apparatus provided as the sixth invention functions as follows.

The detecting part detects the identification data item from the target data having a plurality of module data each including the predetermined data item and an identification data item for identifying the predetermined data item.

Then, the signaling part signals to the data-using entity of the predetermined data that the detecting part has detected the identification data item.

A data processing apparatus as a seventh invention has: a requesting part for requesting a predetermined data item from a data provider providing the predetermined data item; a receiving part for receiving the predetermined data item from the data provider in response to the request made by the requesting part; a first generating part for generating module data including the predetermined data item received by the receiving means and an identification data item for identifying the predetermined data item; and a second generating part for generating data formed by a plurality of the module data generated by the first generating part.

The data processing apparatus provided as the seventh invention functions as follows.

The requesting part requests a predetermined data item from the data provider providing the predetermined data item.

The receiving part then receives the predetermined data item from the data provider in response to the request made by the requesting means.

The first generating part generates module data including the predetermined data item received by the receiving part and an identification data item for identifying the predetermined data item.

The second generating part generates data formed by a plurality of the module data generated by the first generating part.

### BRIEF DESCRIPTION OF THE DRAWINGS

FIG. 1 is a schematic view of a configuration of an editing system of an embodiment according to the present invention.
FIG. 2 is a view of a hardware structure of an editing apparatus shown in FIG. 1.
FIG. 3 is a view for explaining a format for MXF material stream data shown in FIG. 1.
FIG. 4 is a view for explaining KLV data.
FIG. 5 is a view for explaining an example of an operation of the editing apparatus shown in FIG. 1 based on a reader program R_PRG and an application program AP.
FIG. 6 is a flowchart of steps carried out in the setup of FIG. 5.
FIG. 7 is a view for explaining an example of an operation that the reader program R_PRG, in steps ST1 through ST3 shown FIG. 6, parses MXF material stream data STR3 in FIG. 3 to output events.
FIG. 8 is another view for explaining an example of an operation that the reader program R_PRG, in steps ST1 through ST3 shown FIG. 6, parses the MXF material stream data STR3 in FIG. 3 in order to output events.
FIG. 9 is a view for explaining an example of an operation of the editing apparatus shown in FIG. 1 in the case of displaying a GUI screen.
FIG. 10 is a view for explaining an example of an operation of the editing apparatus shown in FIG. 1 in the case where there exist a clip object CLIP_O, a video object VIDEO_O, and an audio object AUDIO_O as application programs AP.
FIG. 11 is a view for explaining an example of an operation of the editing apparatus based on a writer program W_PRG and an application program AP.
FIG. 12 is a flowchart of steps describing the operations shown in FIG. 11.
FIG. 13 is a view for explaining the operations in FIG. 11.
FIG. 14 is a view for explaining an example of an operation how the CPU in FIG. 2 executes a reproduction program REPR, an application program AP, and a writer program W_PRG to generate material stream data STR4 including content data such as reproduced video and audio data.

### BEST MODE FOR CARRYING OUT THE INVENTION

Preferred embodiment of the present invention will be described with reference to the drawings.

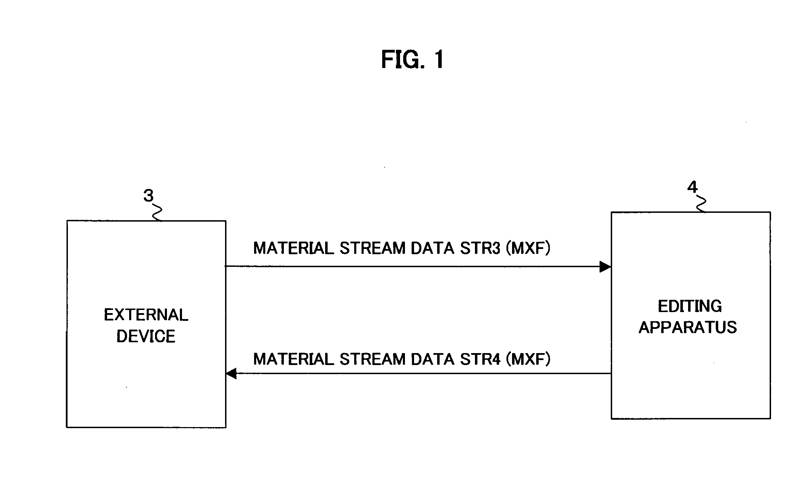

FIG. 1 is a view of a configuration of the editing system 1 of the present embodiment according to the present invention.

As shown in FIG. 1, the editing system 1 has, for example, an external device 3 and an editing apparatus 4.

Here, the editing apparatus 4 corresponds to the data processing apparatus described above as the sixth and the seventh inventions.

The external device 3 is, for example, a VTR (video tape recorder), an optical disc drive, an FTP (File Transfer Protocol) server, or a local drive.

The external device 3 outputs MXF material stream data STR3 to the editing apparatus 4. And it inputs edited material stream data STR4 from the editing apparatus 4.

Next, the editing apparatus 4 shown in FIG. 1 will be described.

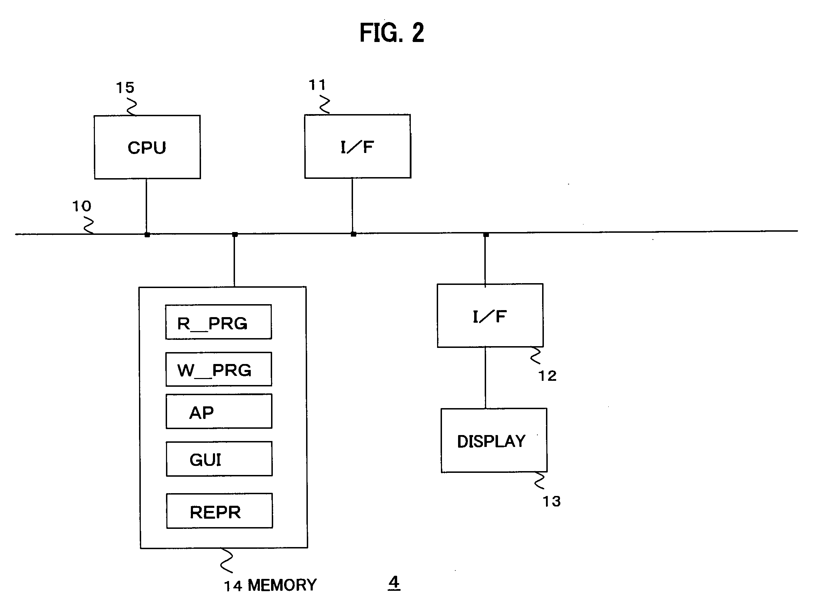

FIG. 2 is a view of a hardware structure of the editing apparatus 4 shown in FIG. 1.

As shown in FIG. 2, the editing apparatus 4 has, for example, an interface 11, an interface 12, a display 13, a memory 14, and a CPU (central processing unit) 15, all interconnected by a bus 10.

Here, the CPU 15 corresponds to the computer of the present invention.

The interface 11 inputs the MXF material stream data STR3 from the external device 3 shown in FIG. 1.

The interface 12 outputs to the display 13 a video signal representing a predetermined edit screen generated in response to a GUI program executed by the CPU 15.

The display 13 displays a GUI screen such as the edit screen reflecting the video signal input from the CPU 15 through the interface 12.

The memory 14 stores a reader program R_PRG, a writer program W_PRG, an application program AP, a GUI program GUI, a reproduction program REPR, and data for use in the execution of these programs.

Here, the reader program R_PRG corresponds to the program described in the first invention or the first program described in the fifth invention. The writer program W_PRG corresponds to the program described in the second invention or the second program described in the fifth invention.

Also, the application program corresponds to the data-using entity and the data provider of the predetermined data of the present invention.

The CPU 15 executes the programs stored in the memory 14 so as to accomplish various processes, as will be described later. The operations of the CPU 15 will be discussed below in detail in conjunction with those operations of the editing apparatus 4 which will also be described later.

First, a format for the material stream data STR3, STR4 in MXF will be described below.

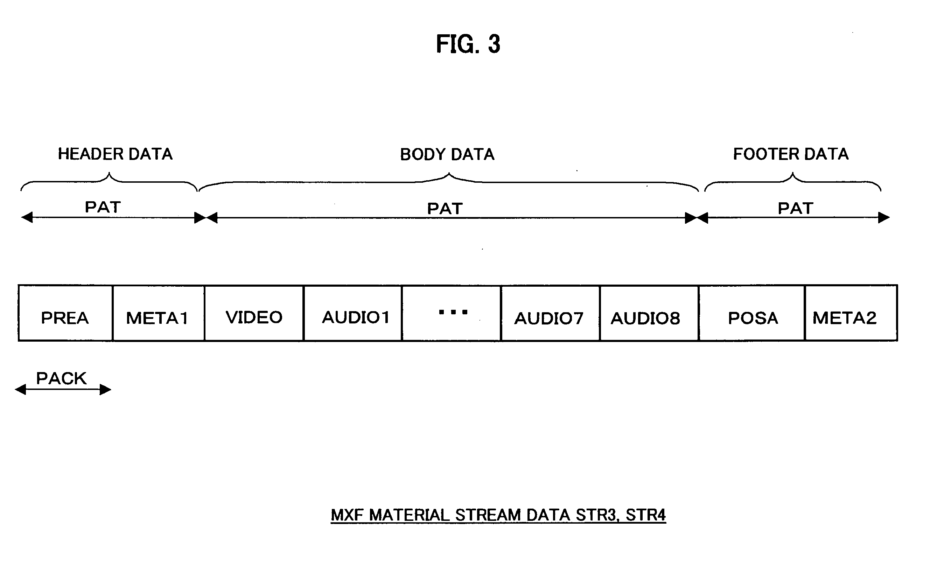

FIG. 3 is a view explaining a format for the MXF material stream data STR3, STR4.

As shown in FIG. 3, the material stream data STR3, STR4 has header data, body data, and footer data. Each set of these component data is defined as module data called a partition PAT.

Each of partition PAT has a plurality of module data respectively called a PACK.

For example, the header data include a preamble PREA as a PACK and meta data META1.

For example, the body data include video data VIDEO as a PACK and six-channel audio data AUDIO1 through AUDIO8.

For example, the footer data include a postamble POSA as a PACK and meta data META2.

The above-described PACKs and the data within each PACK are all KLV data (which corresponds to module data of the present invention).

The material stream data STR3, STR4 have a data structure in which the PACK data including the header data, body data and footer data, as well as the data within the PACK data, includes KLV data respectively formed of a key (K), a data length part (L) and a data item (V). This data structure is defined, for example, by MXF.

Here, the key (K) corresponds to the identification data item of the present invention, and the data item (V) corresponds to the predetermined data item of the present invention respectively.

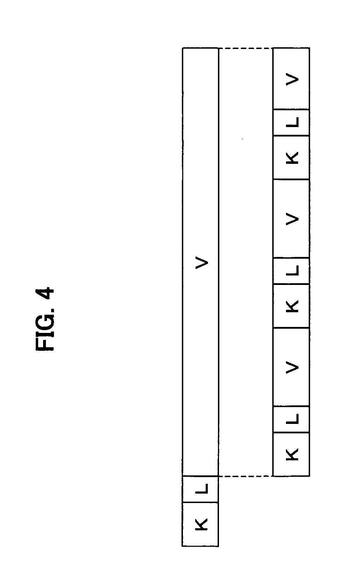

The KLV data are allowed, for example, to have KLV data as a data item (V) as shown in FIG. 4.

### [Reader program R_PRG]

Hereinafter, an example of an operation of the editing apparatus 4 based on the reader program R_PRG and application program AP will be described.

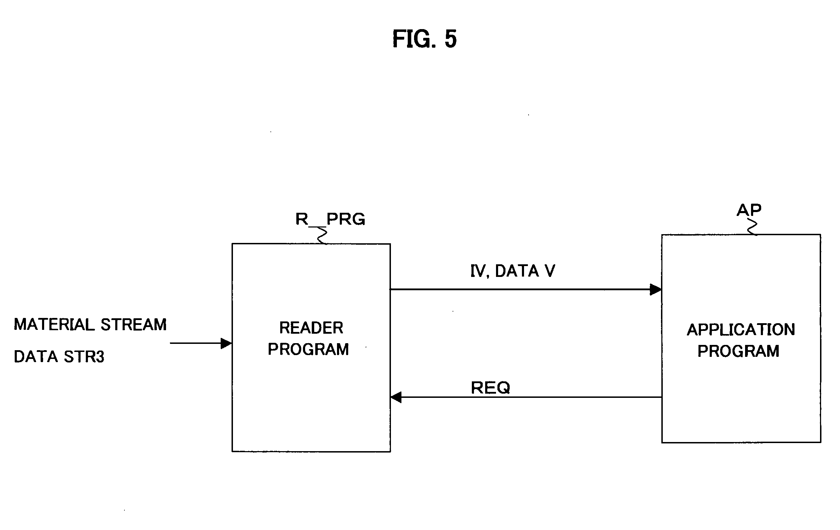

The reader program R_PRG and application program AP are executed by the CPU 15 shown in FIG. 2. In performing the two programs, the CPU 15 brings about the following process. Namely, as shown in FIG. 5, the reader program R_PRG parses the material stream data STR3 input from the external device 3 shown in FIG. 1 through the interface 11 shown in FIG. 2 to detect a key (K) of KLV data, and outputs an event IV signaling the key detection to the application program AP.

Based on the event IV, the application program AP outputs a request REQ to the reader program R_PRG if a data item (V) in the KLV data is necessary.

In response to the request REQ, the reader program R_PRG supplies the application program AP with the data item (V) in the KLV data corresponding to the key (K).

The event IV and data item (V) are output from the reader program R_PRG to the application program AP, for example, on a call-back method.

Namely, for example, the application program AP sets to the reader program R_PRG function pointers of input processing functions for the event IV and data item (V) regarding each necessary event IV.

Then, the reader program R_PRG outputs the event IV to the above-set input processing function pointer for the event IV, and outputs to the above-set input processing function for the data item (V) a memory address pointer pointing for the data item (V) designated by the request REQ as an argument.

With the input processing function for the event IV in effect, the application program AP judges any event IV; with the input processing function for the data item (V) in effect, the application program AP reads the data item (V) designated by the request REQ from the memory address pointed to by the argument.

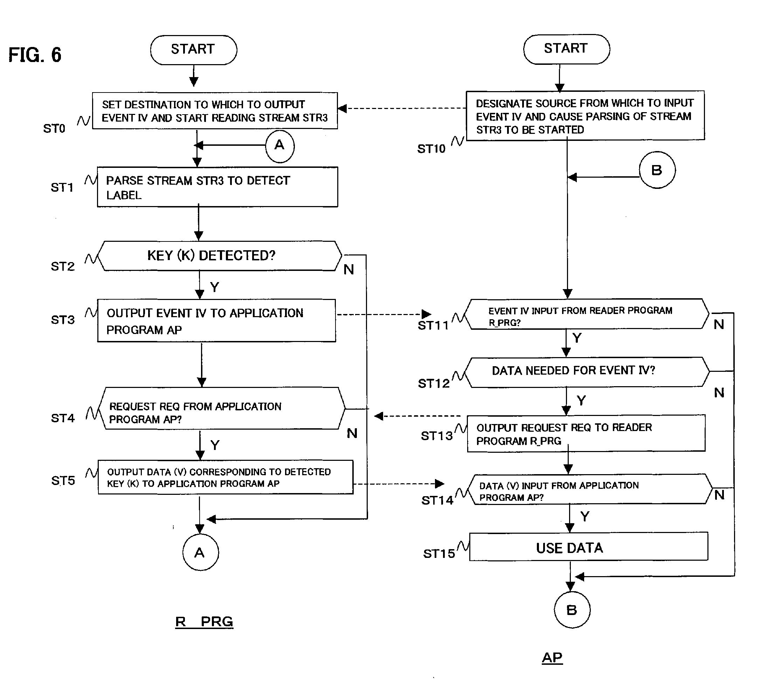

FIG. 6 is a flowchart of steps for processing shown in FIG. 5.

Hereinafter, the respective steps shown in FIG. 6 will be described.

First, the steps performed by the reader program R_PRG will be described.

In FIG. 6, step ST1 corresponds to the first routine of the first invention, step ST3 corresponds to the second routine of the first invention, and ST5 correspond to the third routine of the first invention respectively.

Further, step ST0 corresponds to the detecting part of the fifth invention and step ST3 correspond to and signaling part of the fifth invention respectively.

### Step ST0:

The reader program R_PRG is set to a destination to which to output the event IV and a destination to which to output the data item (V) by the application program AP, for example, at start up. Then, the reader program R_PRG starts parsing based on an instruction of starting to read of the material stream data STR3 as instructed, for example, by the application program AP.

### Step ST1:

The reader program R_PRG parses (construction-analyzes) the material stream data STR3 input from the external device 3 to detect a key (K) of the KLV data from within the stream data STR3.

### Step ST2:

The reader program R_PRG decides if a key (K) has been detected in step ST1. If the key (K) is judged to be detected, the routine proceeds to step ST3; otherwise the routine returns to step ST1.

### Step ST3:

The reader program R_PRG outputs to the application program AP an event IV corresponding to the key (K) detected in step ST1.

In this case, the event IV, for example, includes information for identifying the type of the key (K) detected in step ST1.

### Step ST4:

The reader program R_PRG decides if a request REQ for data has been received from the application program AP. If the request REQ is judged to be received, the routine proceeds to step ST5; otherwise the data item (V) is skipped and the routine returns to step ST1.

The request REQ, for example, includes information for identifying the key (K) of the KLV data containing the data designated by the request REQ.

### Step ST5:

The reader program R_PRG outputs to the application program AP that data item (V) in the KLV data corresponding to the request REQ received in step ST4.

After completing step ST5, the reader program R_PRG returns to step ST1.

Hereinafter, the steps shown in FIG. 6 performed by the application program AP will be described.

### Step ST10:

The application program AP sets a pointer of an input processing function for the event IV demanded by the reader program R_PRG, and a pointer of an input processing function for the data item (V). The application program AP then instructs the reader program R_PRG to start reading the material stream data STR3.

### Step ST11:

The application program AP performs some other processing until an event IV is input from the reader program R_PRG. If the event IV is input, the routine proceeds to step ST12.

### Step ST12:

Based on information identifying the type of the key (K) included in the event IV input in step ST11, the application program AP decides if a data item (V) corresponding to the key (K) is necessary. If the data item (V) is judged to be necessary, the routine proceeds to step ST13; otherwise the routine returns to step ST11.

### Step ST13:

The application program AP outputs a request REQ for the data item (V) to the reader program R_PRG.

This request REQ, for example, includes information for identifying the key (K) of the KLV data containing the data designated by the request REQ.

### Step ST14:

The application program AP decides if the data item (V) corresponding to the request REQ output in step ST13 has been input from the reader program R_PRG. If the data item (V) is judged to have been input, the routine proceeds to step ST15; otherwise the routine returns to step ST11.

### Step ST15:

The application program AP performs a predetermined processing such as editing work using the event IV input from the reader program R_PRG in step ST14.

Below, an example of an operation in which the reader program R_PRG, in steps ST1 through ST3 shown in FIG. 6, parses the material stream data STR3 in MXF shown in FIG. 3 to output events will be described.

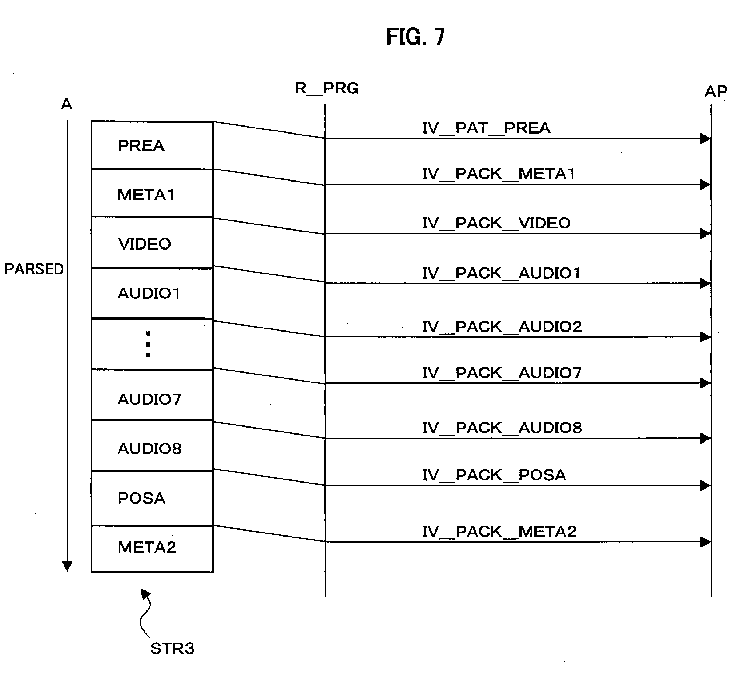

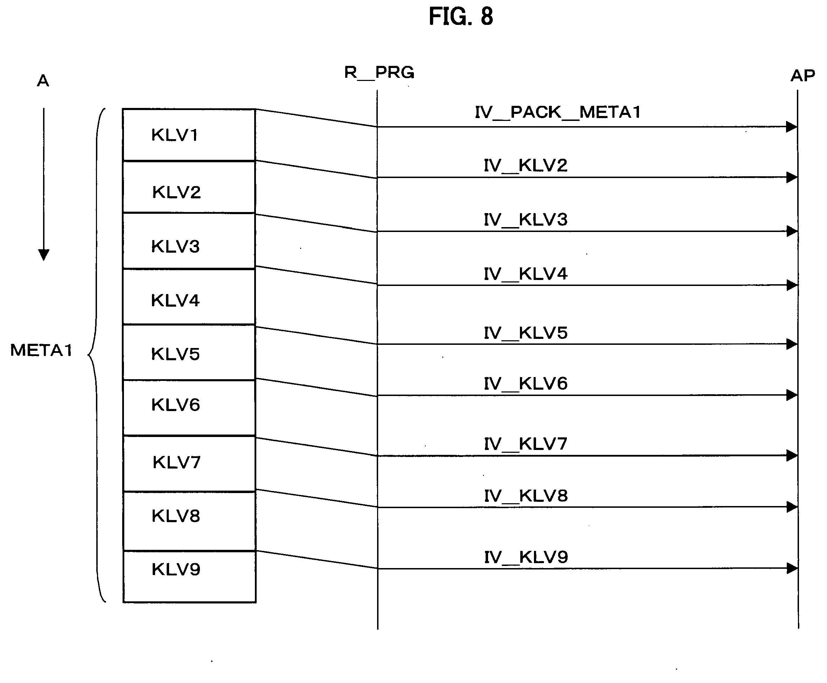

FIGS. 7 and 8 are views for describing this example.

In step ST1 shown in FIG. 6, the reader program R_PRG successively parses the material stream data STR3 from the beginning of a preamble PREA, which is a PACK in the stream data STR3, toward meta data META2 in the direction of an arrow A shown in FIG. 7.

During the parsing process, the reader program R_PRG detects the key (K) of the KLV data heading the preamble PREA (in step ST2 of FIG. 6), and outputs an event IV_PAT_PREA indicating the key detection to the application program AP (in step ST3).

The reader program R_PRG also detects the key (K) of the KLV data heading meta data META1 (in step ST2), and outputs an event IV_PACK_META1 indicating the key detection to the application program AP (in step ST3).

The reader program R_PRG then detects the key (K) of the KLV data heading video data VIDEO (in step ST2), and outputs an event IV_PACK_VIDEO indicating the key detection to the application program AP (in step ST3).

After this, the reader program R_PRG detects successively the keys (K) of the KLV data heading audio data AUDIO1 through AUDIO8, a postamble POSA, and meta data META2 (in step ST2); and outputs to the application program AP events IV_PACK_AUDI01 through IV_PACK_AUDIO8, IV_PACK_POSA, and IV_PACK_META2 indicating the key detection each (in step ST3).

By parsing the above-described PACKs, the reader program R_PRG carries out the processes of steps ST2 and ST3 in FIG. 6 on the entire KLV data constituting the PACKs.

Below, an example of a parses process in the meta data META of PACKs shown in FIG. 7 will be described.

FIG. 8 is a view for describing this example.

As shown in FIG. 8, the reader program R_PRG parses the material stream data STR3 from the beginning of the meta data META toward the end thereof in the direction of an arrow A in FIG. 8 in step ST1 of FIG. 6.

During the above parsing process, the reader program R_PRG detects the key (K) of KLV data KLV1 heading meta data META1 (in step ST2 of FIG. 6), and outputs an event IV_PACK_META1 indicating the key detection to the application program AP (in step ST3).

Then the reader program R_PRG detects successively the keys (K) of KLV data KLV2 through KLV9 in the meta data META1 (in step ST2 of FIG. 6), and outputs to the application program AP events IV_KLV2 through IV_KLV9 indicating the key detection each (in step ST3).

Below, an example of an operation in which the CPU 15 shown in FIG. 2 executes the reader program R_PRG, application program AP, and program GUI to get a GUI screen displayed on the display 13 based on UMID (Unique Material Identifier) data and EM (Essence Mark) data, which are KLV data within the material stream data STR3 will be described.

In this operation example, the reader program R_PRG and application program AP cause the CPU 15 to carry out the operations shown in FIGS. 7 and 8.

The UMID data indicate attributes of the body data shown in FIG. 3, and define the format of the body data, manner of data creation, date of data creation, name of the country in which the data were created, and other attributes on a clip unit. The UMID data are located in the meta data META1 shown in FIG. 3.

The EM data indicate the position of a good shot (picture) designated when the video data in question were recorded in the video data within the body data. The EM data are located within the data corresponding to the respective picture in the body data shown in FIG. 3.

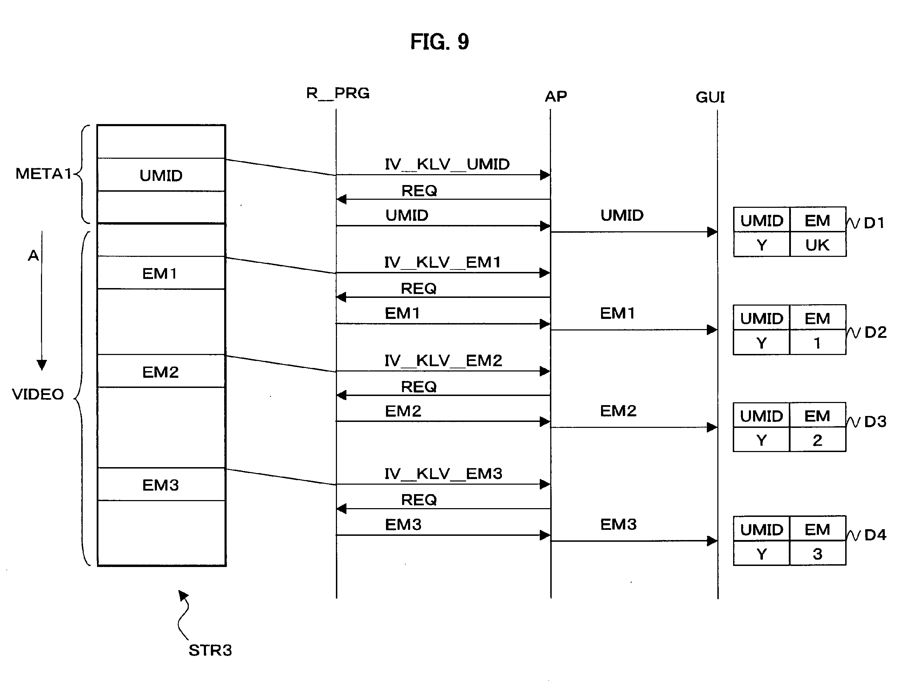

FIG. 9 is a view for explaining an example of an operation of the editing apparatus 4 in the case of displaying the above-described GUI screen.

In step ST1 shown in FIG. 6, as described with reference to FIGS. 7 and 8, the reader program R_PRG parses the material stream data STR3 from the beginning of a preamble PREA (a PACK) toward meta data META2 in the direction of an arrow A in FIG. 9 successively.

During the above parsing process, the reader program R_PRG detects the key (K) of the KLV data storing the UMID data within meta data META1 (in step ST2 of FIG. 6), and outputs an event IV_KLV_UMID indicating the key detection to the application program AP (in step ST3).

Based on the event IV_KLV_UMID, the application program AP judges that the UMID data corresponding to the event are necessary (in step ST12), and outputs a request REQ for the data to the reader program R_PRG (in step ST13).

In response to the request REQ, the reader program R_PRG outputs the UMID data corresponding to the detected key (K) to the application program AP. In turn, the application program AP outputs the UMID data input from the reader program R_PRG to the program GUI.

Based on the UMID data input from the application program AP, the program GUI displays a character "Y" in that item of a GUI screen D1 which corresponds to the UMID data, whereby the presence of the UMID data is indicated.

Thereafter, the reader program R_PRG detects the key (K) of the KLV data storing EM data EM1 within video data VIDEO (in step ST2 of FIG. 6), and outputs an event IV_KLV_EM1 indicating the key detection to the application program AP (in step ST3).

Based on the event IV_ KLV_EM1, the application program AP judges that the EM data EM1 corresponding to the event are necessary (in step ST12), and outputs a request REQ for the data to the reader program R_PRG (in step ST13).

In response to the request REQ, the reader program R_PRG outputs the EM data EM1 corresponding to the detected key (K) to the application program AP.

In turn, the application program AP outputs the EM data EM1 input from the reader program R_PRG to the program GUI.

Based on the EM data EM1 input from the application program AP, the program GUI displays a character "1" in that item of a GUI screen D2 which corresponds to the EM data.

This item representative of the EM data indicates the number of mark data detected from the material stream data STR3.

The reader program R_PRG then detects the key (K) of the KLV data storing EM data EM2 within the video data VIDEO (in step ST2 of FIG. 6), and outputs an event IV_KLV_EM2 indicating the key detection to the application program AP (in step ST3).

Based on the event IV_KLV_EM2, the application program AP judges that the EM data EM2 corresponding to the event are necessary (in step ST12), and outputs a request REQ for the data to the reader program R_PRG (in step ST13).

In response to the request REQ, the reader program R_PRG outputs the EM data EM2 corresponding to the detected key (K) to the application program AP.

In turn, the application program AP outputs the EM data EM2 input from the reader program R_PRG to the program GUI.

Based on the EM data EM2 input from the application program AP, the program GUI increments by 1 the current item of the GUI screen D2 which corresponds to the EM data, and displays a character "2" in the item.

Furthermore, the reader program R_PRG detects the key (K) of the KLV data storing EM data EM3 within the video data VIDEO (in step ST2 of FIG. 6), and outputs an event IV_KLV_EM3 indicating the key detection to the application program AP (in step ST3).

Based on the event IV_KLV_EM3, the application program AP judges that the EM data EM3 corresponding to the event are necessary (in step ST12), and outputs a request REQ for the data to the reader program R_PRG (in step ST13).

In response to the request REQ, the reader program R_PRG outputs the EM data EM3 corresponding to the detected key (K) to the application program AP.

In turn, the application program AP outputs the EM data EM3 input from the reader program R_PRG to the program GUI.

Based on the EM data EM3 input from the application program AP, the program GUI increments by 1 the current item of the GUI screen D2 which corresponds to the EM data, and displays a character "3" in the item.

As described above, the editing apparatus 4 causes the reader program R_PRG to parse the material stream data STR3 to detect the UMID and EM data therefrom, while allowing the application program AP to acquire the detected data from the reader program R_PRG if necessary. The application program AP is thus freed from the detecting processing of UMID and EM data and appreciably reduced of its workload.

Next, an example of an operation of the editing apparatus 4 in the case of using a clip object CLIP_O, a video object VIDEO_O, and an audio object AUDIO_O as application programs AP will be described.

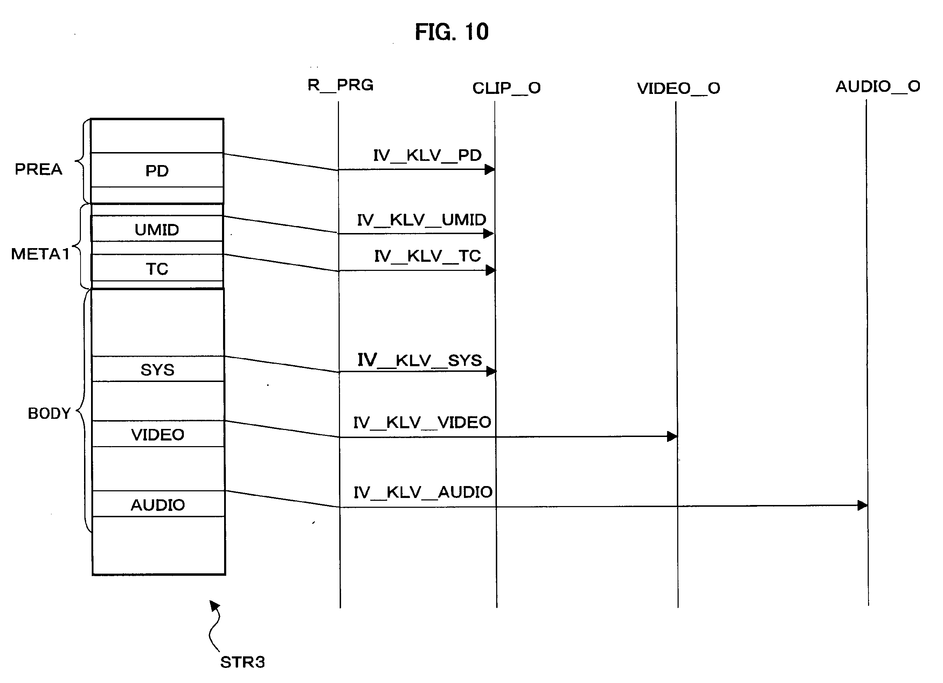

FIG. 10 is a view for describing this example.

In step ST1 shown in FIG. 6, as described with reference to FIGS. 7 and 8, the reader program R_PRG successively parses the material stream data STR3 from the beginning of a preamble PREA (a PACK) toward meta data META2.

During the parsing process, the reader program R_PRG detects the key (K) of the KLV data storing property data PD within the preamble PREA (in step ST2 of FIG. 6), and outputs an event IV_KLV_PD indicating the key detection to the clip object CLIP_O (in step ST3).

Based on the event IV_KLV_PD, the clip object CLIP_O judges that the PD data corresponding to the event are necessary (in step ST12), and outputs a request REQ for the data to the reader program R_PRG (in step ST13).

In response to the request REQ, the reader program R_PRG outputs the PD data corresponding to the detected key (K) to the clip object CLIP_O.

The reader program R_PRG then detects the key (K) of the KLV data storing the UMID data within meta data META1 (in step ST2 of FIG. 6), and outputs an event IV_KLV_UMID indicating the key detection to the clip object CLIP_O (in step ST3).

Based on the event IV_KLV_UMID, the clip object CLIP_O judges that the UMID data corresponding to the event are necessary (in step ST12), and outputs a request REQ for the data to the reader program R_PRG (in step ST13).

In response to the request REQ, the reader program R_PRG outputs the UMID data corresponding to the detected key (K) to the clip object CLIP_O.

Thereafter, the reader program R_PRG detects the key (K) of the KLV data storing TC (time code) data within the meta data META1 (in step ST2 of FIG. 6), and outputs an event IV_KLV_TC indicating the key detection to the clip object CLIP_O (in step ST3).

Based on the event IV_KLV_TC, the clip object CLIP_O judges that the TC data corresponding to the event are necessary (in step ST12), and outputs a request REQ for the data to the reader program R_PRG (in step ST13).

In response to the request REQ, the reader program R_PRG outputs the TC data corresponding to the detected key (K) to the clip object CLIP_O.

Furthermore, the reader program R_PRG detects the key (K) of the KLV data storing system data SYS within the body data (in step ST2 of FIG. 6), and outputs an event IV_KLV_SYS indicating the key detection to the clip object CLIP_O (in step ST3).

Based on the event IV_KLV_SYS, the clip object CLIP_O judges that the system data SYS corresponding to the event are necessary (in step ST12), and outputs a request REQ for the data to the reader program R_PRG (in step ST13).

In response to the request REQ, the reader program R_PRG outputs the system data SYS corresponding to the detected key (K) to the clip object CLIP_O.

Based on the data input from the reader program R_PRG, the clip object CLIP_O generates clip data associated with the video data and audio data.

Then, the reader program R_PRG also detects the key (K) of the KLV data containing video data VIDEO within the body data (in step ST2 of FIG. 6), and outputs an event IV_ KLV_VIDEO indicating the key detection to the video object VIDEO_O (in step ST3).

Based on the event IV_KLV_VIDEO, the video object VIDEO_O judges that the video data VIDEO corresponding to the event are necessary (in step ST12), and outputs a request REQ for the data to the reader program R_PRG (in step ST13).

In response to the request REQ, the reader program R_PRG outputs the video data VIDEO corresponding to the detected key (K) to the video object VIDEO_O.

The video object VIDEO_O performs editing work on the video data VIDEO input from the reader program R_PRG if necessary or decodes the data if they are encoded.

The reader program R_PRG then detects the key (K) of the KLV data storing audio data AUDIO within the body data (in step ST2 of FIG. 6), and outputs an event IV_ KLV_AUDIO indicating the key detection to the audio object AUDIO_O (in step ST3).

Based on the event IV_ KLV_AUDIO, the audio object AUDIO_O judges that the audio data AUDIO corresponding to the event are necessary (in step ST12), and outputs a request REQ for the data to the reader program R_PRG (in step ST13).

In response to the request REQ, the reader program R_PRG outputs the audio data AUDIO corresponding to the detected key (K) to the audio object AUDIO_O.

The audio object AUDIO_O performs editing work on the audio data AUDIO from the reader program R_PRG if necessary or decodes the data if they are encoded.

### [Writer program W_PRG]

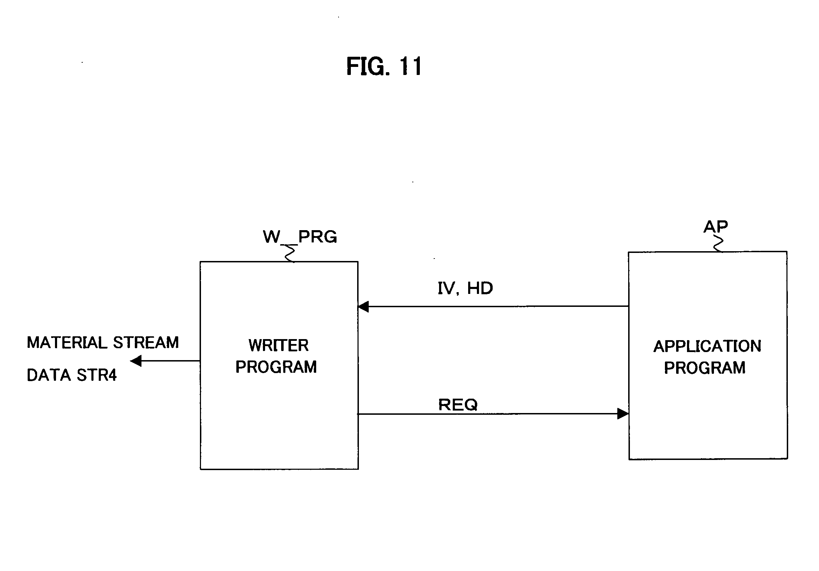

Below, an example of an operation for the editing apparatus 4 based on the writer program W_PRG and application program AP shown in FIG. 11 will be described.

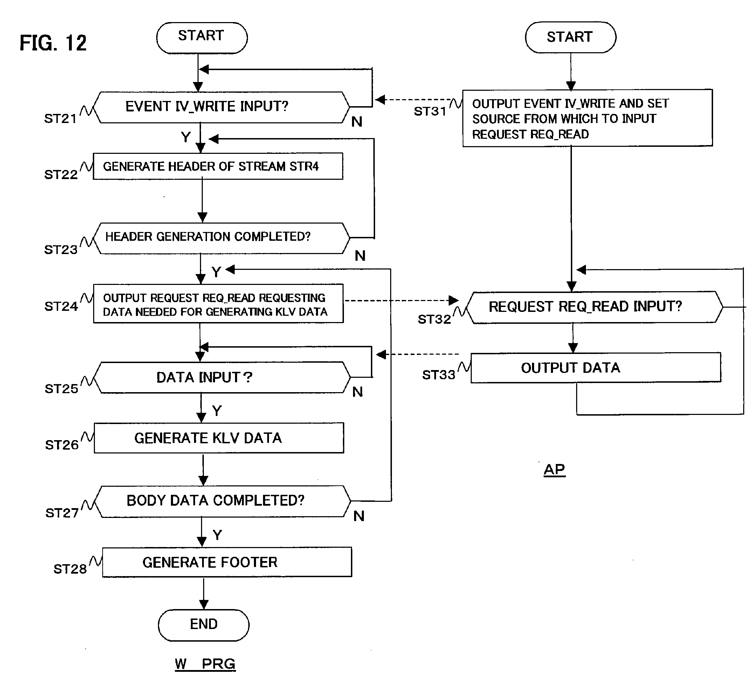

FIG. 12 is a flowchart of steps for explaining this example.

In FIG. 12, step ST21 corresponds to the first step, step ST25 to the second step, and step ST26 to the third and the fourth steps of the second invention.

Furthermore, step ST21 corresponds to the requesting part, step ST25 to the receiving part, and step ST26 to the first and the second generating part of the sixth invention.

Hereinafter, the steps shown in FIG. 12 will be described.

First, the steps performed by the writer program W_PRG will be described.

### Step ST21:

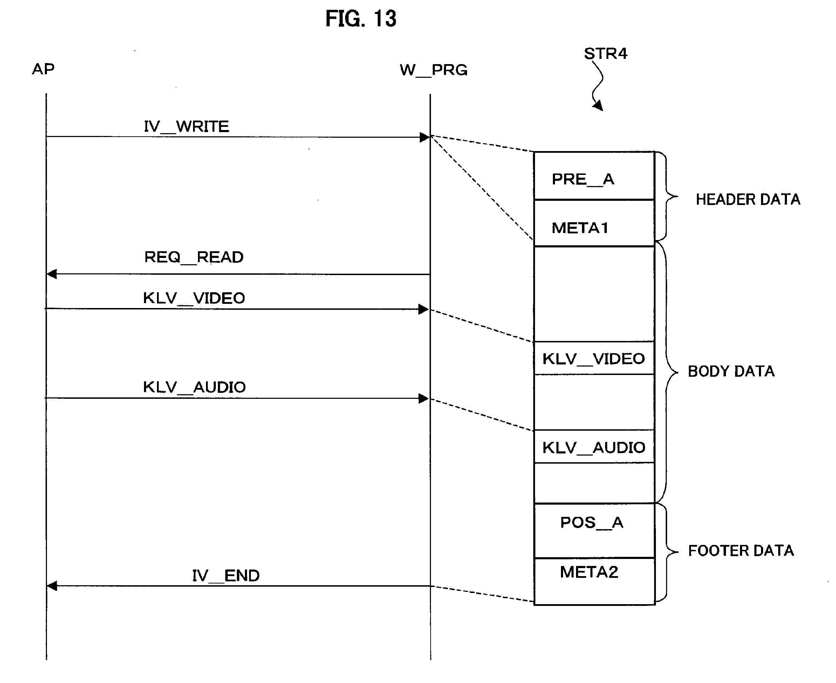

As shown in FIG. 13, the writer program W_PRG inputs an event IV_WRITE and header data HD from the application program AP. At the same time, the writer program W_PRG sets a destination to which to output a request REQ_READ for the application program AP.

### Step ST22:

Based on the event IV_WRITE input in step ST21, the writer program W_PRG starts generating header data for the material stream data STR4.

Based on the header data HD also input in step ST21, the writer program W_PRG further generates header data for the material stream data STR4.

### Step ST23:

The writer program W_PRG decides if generation of the header data for the material stream data STR4 is completed. If the generation of the header data is judged to be completed, the routine proceeds to step ST24; otherwise the routine returns to step ST22 and the writer program W_PRG continues to generate the header data.

### Step ST24:

The writer program W_PRG outputs a request REQ_READ to the application program AP, the request REQ_READ requesting the data such as video and audio data demanded to generation of the KLV data constituting the body data in the material stream data STR4.

### Step ST25:

The writer program W_PRG decides if the data corresponding to the request REQ_READ issued in step ST24 are input from the application program AP. If the corresponding data are judged to be input, the routine proceeds to step ST26; otherwise the routine repeats a process of step ST25.

### Step ST26:

Using the data input from the application program AP, the writer program W_PRG generates the KLV data constituting the body data.

### Step ST27:

The writer program W_PRG decides if generation of the body data is completed. If the generation of the body data is judged to be completed, the routine proceeds to step ST28; otherwise the routine returns to step ST24.

### Step ST28:

The writer program W_PRG generates footer data.

This completes the generation of the material stream data STR4 including the header data, body data, and footer data.

With the material stream data STR4 thus generated and complete, the writer program W_PRG outputs an event IV_END to the application program AP.

Next, steps in FIG. 12 performed by the application program AP will be described.

### Step ST31:

The application program AP first prepares the header data HD to be stored into the header data part of the material stream data STR4 which is output to the external device 3, and outputs to the writer program W_PRG the header data HD together with an event IV_WRITE corresponding to an instruction for generating the material stream data STR4. The application program AP also sets a pointer of an input processing function for the request REQ_READ coming from the writer program W_PRG on a call-back method.

At this point, the application program AP generates the header data HD including information concerning MXF, such as formats of video and audio data, a data display format, a reproduction length, and UMID data, all written in XML (extensible Markup Language).

### Step ST32:

The application program AP performs some other processing until the request REQ-READ is input from the writer program W_PRG. If the request REQ_READ is judged to be input from the writer program W_PRG, the routine proceeds to step ST33; otherwise the routine repeats the process of step ST32.

### Step ST33:

The application program AP outputs to the writer program W_PRG the data to be stored into the body data part of the material stream data STR4.

Below, an example of an operation in which the CPU 15 executes the reproduction program REPR, application program AP, and writer program W_PRG to generate the material stream data STR4 including content data such as reproduced video and audio data will be described.

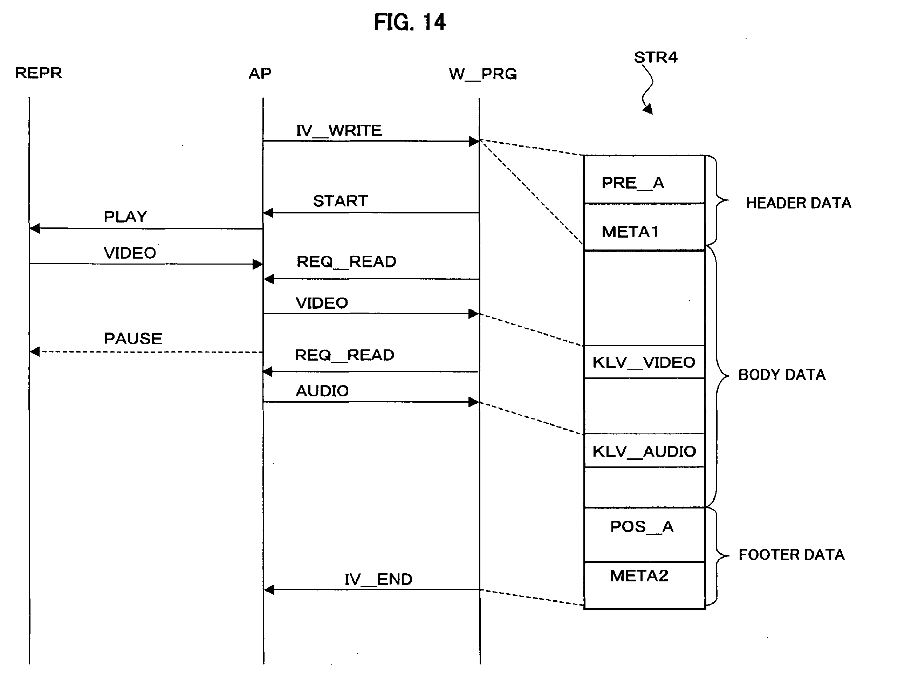

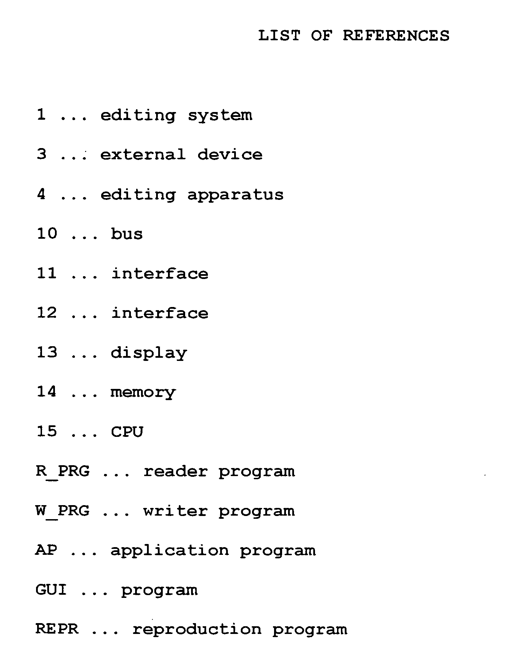

FIG. 14 is a view for describing this example.

The application program AP outputs header data HD together with an event IV_WRITE to the writer program W_PRG.

Then, based on the input header data HD, the writer program W_PRG generates the header data for the material stream data STR4.

With the header data generation completed, the writer program W_PRG outputs to the application program AP a request START instructing a reproduction of the content data by the reproduction program REPR.

In response to the request START, the application program AP outputs a reproduction request PLAY to the reproduction program REPR.

In response to the received reproduction request PLAY, the reproduction program REPR starts reproducing the content data such as video data stored on a suitable recording medium.

The reproduction program REPR writes the reproduced video data VIDEO to a predetermined FIFO (first-in, first-out) memory that is accessed by the application program AP, for example, on a frame unit.

While the body data are being generated, the writer program W_PRG outputs to the application program AP a request REQ_READ requesting the video data demanded to the KLV data for forming the body data.

In response to the request REQ_READ, the application program AP reads the video data VIDEO from the FIFO memory and outputs the result to the writer program W_PRG.

The same operation is performed on the audio data as well. That is, the application program AP, in response to the request REQ_READ, reads the audio data AUDIO from the FIFO memory and outputs the result to the writer program W_PRG.

The above operations are carried out on the entire KLV data that form the body data.

With the generation of the material stream data STR4 completed, the writer program W_PRG outputs an event IV_END to the application program AP.

During the above processing, the application program AP monitors the FIFO memory, and, when detecting the possibility of a data overflow in the FIFO memory, outputs a request PAUSE instructing a stop of the reproduction to the reproduction program REPR.

This causes the reproduction program REPR temporarily to stop reproduction of the content data. When the possibility of the data overflow has disappeared, the application program AP outputs a reproduction start request to the reproduction program REPR. In the example shown in FIG. 14, the narrower the bandwidth of the transmission line between the external device 3 and the editing apparatus 4, the longer the interval between the requests REQ_READ output to the application program AP resulting in a growing possibility of a data overflow in the FIFO memory. Therefore, the reproduction program REPR may perform the reproduction of content data at a rate that is inversely proportional to the interval between the requests REQ_READ. Consequently, this will prevent the material stream data STR4 from getting interrupted as they are being output from the editing apparatus 4 to the external device 3.

During the processing above, the application program AP may prepare and output content data to be output next between any two requests REQ_READ from the writer program W_PRG.

As described above, the editing apparatus 4 uses the reader program R_PRG which, independent of the application program AP, parses the material stream data STR3 to detect the keys (K) in the KLV data before outputting the events IV to the application program AP. This frees the application program AP from the workload of parsing the material stream data STR3, allowing the program AP to perform other editing work more efficiently than before.

Apart from the application program AP, the editing apparatus 4 also utilizes the writer program W_PRG to generate the material stream data STR4. This frees the application program AP from the task of generating the material stream data STR4, enabling the program AP to carry out other editing work more efficiently than before.

The present invention is not limited to the embodiments above described.

For example, in the above embodiment, although the material stream data STR3, STR4 in MXF described with reference to FIG. 3 and other attached drawings were shown to represent the predetermined data according to the present invention. Alternatively, the present invention can apply just as advantageously to data in a format other than MXF as long as the data have a plurality of module data each including a predetermined data item and an identification data item for identifying that predetermined data item.

As described above, the present invention can provide a program able to reduce the workload on a data-using entity using a predetermined data item detected from a target data having a plurality of module data each including the predetermined data item and an identification data item for identifying the predetermined data item, a data processing method, and a data processing apparatus.

This invention further can provide a program able to reduce the workload on a data provider providing the predetermined data item to generate a plurality of module data each including a predetermined data item and an identification data item for identifying the predetermined data item, a data processing method, and a data processing apparatus.

### INDUSTRIAL APPLICABILITY

The present invention is applicable to a data processing system.

## Claims

1. A program which causes a computer to execute routine, said routine comprising:
a first routine of detecting an identification data item for identifying a predetermined data item from a target data having a plurality of module data respectively including said predetermined data item and said identification data item, and
a second routine of signaling to a data-using entity of the predetermined data that said identification data item has been detected in said first routine.

2. A program as set forth in claim 1, further comprising a third routine of, in response to a request from said data-using entity, supplying said data-using entity with said predetermined data item from within said module data and said identification data item having been detected in said first routine.

3. A program as set forth in claim 1, wherein said second routine signals to said data-using entity only if the identification data item designated beforehand by said data-using entity has been detected in said first routine.

4. A program as set forth in claim 1, wherein said second routine, based on said identification data item, gives said data-using entity the signal designating an attribute of the module data formed by said detected identification data item.

5. A program as set forth in claim 1, wherein said identification data item is detected from said target data, said target data comprising:
first module data including content data as said predetermined data item, and
second module data including attribute data of said content data as said predetermined data item.

6. A program which causes a computer to execute routine, said routine comprising:
a first routine of requesting a predetermined data item from a data provider providing said predetermined data item;
a second routine of receiving said predetermined data item from said data provider in response to the request made in said first routine;
a third routine of generating module data including said predetermined data item received in said second routine and an identification data item for identifying said predetermined data item; and
a fourth routine of generating data having a plurality of said module data generated in said third routine.

7. A program as set forth in claim 6, further comprising:
a fifth routine of receiving attribute data indicating an attribute of content data, and
a sixth routine of generating first module data including said attribute data, which is received in said fifth routine, as said predetermined data item,
wherein said first routine requests said content data from said data provider,
said second routine receives said content data from said data provider in response to said request made in said first routine,
said third routine generates second module data including said content data, which is received in said second routine, as said predetermined data item, and
said fourth routine generates data having said first module data generated in said sixth routine and of said second module data generated in said third routine.

8. A data processing method executed by a computer, said method comprising:
a first step of detecting an identification data item for identifying a predetermined data item from a target data having a plurality of module data each including said predetermined data item and said identification data item, and
a second step of signaling to a data-using entity of the predetermined data that said identification data item has been detected in said first step.

9. A data processing method executed by a computer, said method comprising:
a first step of requesting a predetermined data item from a data provider providing said predetermined data item;
a second step of receiving said predetermined data item from said data provider in response to the request made in said first step;
a third step of generating module data including said predetermined data item received in said second step and an identification data item for identifying said predetermined data item; and
a fourth step of generating data formed by a plurality of said module data generated in said third step.

10. A data processing method for causing a computer to execute a first program and a second program in parallel, said data processing method comprising:
a first step of causing said first program to detect an identification data item for identifying a predetermined data item from a target data having a plurality of module data respectively including said predetermined data item and said identification data item;
a second step of causing said first program to signal to said second program that said identification data item has been detected in said first step;
a third step of causing said second program, based on the signal coming from said first program in said second step, to receive from said first program said predetermined data item in the module data including said identification data item detected in said first step; and
a fourth step of allowing said second program to use said predetermined data item received in said third step.

11. A data processing apparatus comprising:
a detecting means for detecting an identification data item for identifying a predetermined data item from a target data having a plurality of module data each including said predetermined data item and said identification data item, and
a signaling means for signaling to a data-using entity of said predetermined data that said identification data item has been detected by said detecting means.

12. A data processing apparatus comprising:
a requesting means for requesting a predetermined data item from a data provider providing said predetermined data item;
a receiving means for receiving said predetermined data item from said data provider in response to the request made by said requesting means;
a first generating means for generating module data including said predetermined data item received by said receiving means and an identification data item for identifying said predetermined data item; and
a second generating means for generating data formed by a plurality of said module data generated by said first generating means.
